# EUROPEAN PATENT APPLICATION

(11) **EP 2 472 665 A1**
(43) Date of publication of application: **04.07.2012**
(21) Application number: 10821938.7
(22) Date of filing: 01.10.2010
(51) Int. Cl.: H01M 10/0585, H01M 4/131, H01M 4/134, H01M 10/052, H01M 10/0562

(54) **NON-AQUEOUS ELECTROLYTE CELL**

(30) Priority: 05.10.2009 JP 2009231909; 05.10.2009 JP 2009231910; 06.01.2010 JP 2010001355
(71) Applicant: Sumitomo Electric Industries, Ltd., Osaka-shi, Osaka 541-0041 (JP)
(72) Inventor: OGAWA, Mitsuyasu, Itami-shi Hyogo 664-0016 (JP); UEMURA, Takashi, Itami-shi Hyogo 664-0016 (JP); YOSHIDA, Kentaro, Itami-shi Hyogo 664-0016 (JP); KANDA, Ryoko, Itami-shi Hyogo 664-0016 (JP)
(74) Representative: Setna, Rohan P.
(86) International application number: PCT/JP2010/067265
(87) International publication number: WO 2011/043267

(57) **Abstract**

Provided is a nonaqueous electrolyte battery having a high charge-discharge cycle capability in which the battery capacity is less likely to decrease even after repeated charge and discharge. The nonaqueous electrolyte battery includes a positive-electrode layer 1, a negative-electrode layer 2, a solid electrolyte layer 3 interposed between the positive-electrode layer 1 and the negative-electrode layer 2, and a boundary layer 4 between the negative-electrode layer 2 and the solid electrolyte layer 3, the boundary layer 4 maintaining the bond between the negative-electrode layer 2 and the solid electrolyte layer 3. The negative-electrode layer 2 at least contains Li. The boundary layer 4 at least contains a group 14 element in the periodic table. The boundary layer 4 has a thickness of 50 nm or less.

## Description

### Technical Field

The present invention relates to a nonaqueous electrolyte battery having a high charge-discharge cycle capability.

### Background Art

Nonaqueous electrolyte batteries are used as power supplies of relatively small electric devices such as portable devices. A representative example of such nonaqueous electrolyte batteries is a lithium-ion secondary battery (hereafter, simply referred to as a lithium secondary battery), which uses intercalation and deintercalation reactions of lithium ions in positive and negative electrodes.

The lithium secondary battery is charged and discharged by transportation of lithium (Li) ions between a positive-electrode layer and a negative-electrode layer through an electrolyte layer. In recent years, all-solid-state lithium secondary batteries having an electrolyte layer composed of a nonflammable inorganic solid electrolyte instead of an organic electrolytic solution have been studied (for example, refer to Patent Literature 1).

Patent Literature 1 proposes thin-film batteries having a positive-electrode layer, a negative-electrode layer, and a solid electrolyte layer that are formed by a vapor-phase method (for example, a sputtering method or a vapor deposition method). Patent Literature 1 also discloses that the negative-electrode layer (second electrode) is composed of, for example, a carbon material such as graphite or hard carbon, silicon (Si), silicon oxide (SiOₓ (0 < x < 2)), a tin alloy, lithium-cobalt nitride (LiCoN), Li metal, or a lithium alloy (for example, LiAl) (paragraph 0050 of Patent Literature 1).

### Citation List

### Patent Literature

PTL 1: Japanese Unexamined Patent Application Publication No. 2004-335455

### Summary of Invention

### Technical Problem

However, existing lithium secondary batteries, for example, those disclosed in PTL 1 have a problem that the battery capacity decreases with repeated charge and discharge. Accordingly, it is desirable to further improve the charge-discharge cycle capability.

For example, when a negative-electrode layer is formed of an element that alloys with Li, such as Si, the volume of the negative-electrode layer considerably varies with intercalation and deintercalation of Li ions on charge and discharge. Thus, the negative-electrode layer tends to separate from the solid electrolyte layer.

On the other hand, when a negative-electrode layer is formed of Li metal or a lithium alloy, Li precipitates on charge and Li dissolves on discharge at the interface between the negative-electrode layer and the solid electrolyte layer. Accordingly, with repeated charge and discharge, it becomes difficult to maintain the bond between the negative-electrode layer and the solid electrolyte layer. When the bond between the negative-electrode layer and the solid electrolyte layer is thus broken, the effective area of the battery is decreased and the battery capacity is decreased.

The present invention has been made under these circumstances. An object of the present invention is to provide a nonaqueous electrolyte battery that can maintain the bond between the negative-electrode layer and the solid electrolyte layer even after repeated charge and discharge, and has a high charge-discharge cycle capability.

### Solution to Problem

The present invention achieves this object by providing a boundary layer that is disposed between the negative-electrode layer and the solid electrolyte layer and bonds these layers together and by defining the thickness of the boundary layer.

(1) A nonaqueous electrolyte battery according to the present invention includes a positive-electrode layer, a negative-electrode layer, and a solid electrolyte layer interposed between the positive-electrode layer and the negative-electrode layer, wherein a boundary layer is provided between the negative-electrode layer and the solid electrolyte layer, the negative-electrode layer at least contains Li, the boundary layer at least contains a group 14 element in the periodic table, and the boundary layer has a thickness of 50 nm or less.

In a nonaqueous electrolyte battery including a boundary layer according to the present invention, the boundary layer promotes diffusion of Li ions into the negative-electrode layer, the Li ions moving from the positive-electrode layer to the negative-electrode layer on charge. In particular, a boundary layer containing a group 14 element in the periodic table has a high capability (diffusion capability) of intercalating Li ions having moved from the positive-electrode layer through the solid electrolyte layer and allowing the Li ions to diffuse into the negative-electrode layer on charge. Thus, in a configuration according to the present invention, Li is less likely to precipitate at the interface between the negative-electrode layer and the solid electrolyte layer on charge and expansion of the interface between the layers can be suppressed. As a result, even when charge and discharge are repeated, the bond between the negative-electrode layer and the solid electrolyte layer is sufficiently maintained and the battery capacity is less likely to decrease. The content of the group 14 element in the periodic table in the boundary layer is preferably 50 mass% or more, more preferably 80 mass% or more.

The boundary layer has a thickness of 50 nm or less. When the boundary layer has a thickness of more than 50 nm, the boundary layer exhibits the capability of intercalating Li ions thereinto rather than the capability of allowing Li ions to diffuse into the negative-electrode layer. Thus, the volume of the boundary layer considerably varies and the bond at the interface between the negative-electrode layer and the solid electrolyte layer may be broken. The boundary layer preferably has a thickness of 20 nm or less. When the thickness of the boundary layer is excessively small, the advantage provided by the presence of the boundary layer may be insufficient and the bond at the interface between the negative-electrode layer and the solid electrolyte layer may also be broken. Accordingly, the boundary layer has a thickness of more than 0, preferably more than 5 nm, more preferably 10 nm or more.

The thickness of the negative-electrode layer is not particularly limited and is preferably 0.1 to 10 µm. When the thickness is in this range, a battery having a battery capacity suitable for various applications can be provided. The thickness of the negative-electrode layer is more preferably 0.5 to 2 µm.

Hereinafter, preferred embodiments of the present invention will be described.

(2) In the battery in plan view, the boundary layer preferably has an area equal to or less than the area of the negative-electrode layer.

By thus defining the area of the boundary layer with respect to the negative-electrode layer, a decrease in the battery capacity is suppressed and a high battery capacity can be maintained. Specifically, when the area of the boundary layer is made larger than the area of the negative-electrode layer, at a region (protruding region) of a surface (that is on the other side with respect to a surface facing the solid electrolyte layer) of the boundary layer, the protruding region not being covered by the negative-electrode layer, Li ions having moved from the positive-electrode layer may be reduced so that Li precipitates on charge. In particular, this tendency increases when the positive-electrode layer has a larger area than the negative-electrode layer. Thus, the number of Li ions moving between the positive and negative electrodes is decreased and hence the battery capacity is decreased.

In this case, the area of the boundary layer is preferably made smaller than that of the negative-electrode layer. As a result, the protrusion of the boundary layer is reliably prevented and the decrease in the battery capacity due to precipitation of Li on the surface of the protruding region of the boundary layer can be suppressed. When the area of the boundary layer is made excessively small with respect to the area of the negative-electrode layer, the advantage provided by the presence of the boundary layer is less likely to be provided. Accordingly, when the area of the negative-electrode layer is defined as Sn and the area of the boundary layer is defined as Sb, the ratio between Sn and Sb preferably satisfies 0.4Sn ≤ Sb.

When the area of the negative-electrode layer is small with respect to the solid electrolyte layer, by making the area of the boundary layer be equal to or less than the area of the negative-electrode layer, the short circuit between the positive and negative electrodes can be suppressed. When the area of the boundary layer is made larger than that of the negative-electrode layer, the distance from the circumference of the boundary layer (protruding region) to the circumference of the solid electrolyte layer correspondingly becomes short with respect to the distance from the circumference of the negative-electrode layer to the circumference of the solid electrolyte layer. Li having precipitated on the surface of the protruding region of the boundary layer grows in the form of whiskers with repeated charge and discharge and may extend along the surface of the solid electrolyte layer to eventually reach the circumference of the solid electrolyte layer. At worst, Li having grown in the form of whiskers from the surface of the protruding region of the boundary layer may extend from the circumference of the solid electrolyte layer to the positive-electrode layer, causing the short circuit between the positive and negative electrodes. In summary, when the distance from the circumference of the boundary layer (protruding region) to the circumference of the solid electrolyte layer is short, Li having grown from the surface of the protruding region of the boundary layer tends to extend along the surface of the solid electrolyte layer and reach the positive-electrode layer, which probably results in a short circuit with the positive electrode.

(3) The element contained in the boundary layer is preferably Si.

When the boundary layer contains Si, a nonaqueous electrolyte battery having a higher charge-discharge cycle capability can be provided. In particular, when the boundary layer is substantially composed of Si, the battery has a high discharge capability.

(4) The boundary layer preferably has an Ar concentration of 1 atomic percent or less.

The inventors of the present invention have found that, by making the boundary layer have an Ar concentration of 1 atomic percent or less, turning of the boundary layer into fine powder due to repeated charge and discharge can be suppressed. In this configuration, a decrease in the effective area of the battery due to the turning of the boundary layer into fine powder is less likely to be caused and the battery capacity is less likely to decrease. The Ar concentration of the boundary layer is changed in accordance with, in the formation of the boundary layer in an Ar-containing plasma atmosphere by a vapor-phase method, for example, the Ar concentration of the atmosphere (the rate at which Ar gas is supplied to the atmosphere) or the pressure of the atmosphere.

(5) When the thickness of the negative-electrode layer is defined as Tn and the thickness of the boundary layer is defined as Tb, a ratio of Tb to Tn preferably satisfies 0.005 < Tb/Tn < 0.5.

When the ratio (Tb/Tn) of the thickness of the boundary layer to the thickness of the negative-electrode layer is in the range, the bond between the negative-electrode layer and the solid electrolyte layer is probably further maintained. Specifically, when the Tb/Tn is excessively large, the boundary layer exhibits the capability of intercalating Li ions thereinto rather than the capability of allowing Li ions to diffuse into the negative-electrode layer. Thus, the volume of the boundary layer considerably varies and the bond at the interface between the negative-electrode layer and the solid electrolyte layer may be broken. On the other hand, when the Tb/Tn is excessively small, the advantage provided by the presence of the boundary layer may be insufficient and the bond at the interface between the negative-electrode layer and the solid electrolyte layer may also be broken. The Tb/Tn is more preferably in the range of 0.01 to 0.4.

(6) The solid electrolyte layer is preferably composed of a sulfide-based solid electrolyte at least containing Li₂S and P₂S₅.

Examples of a sulfide-based solid electrolyte for the solid electrolyte layer include a Li₂S-P₂S₅-based electrolyte, a Li₂S-SiS₂-based electrolyte, and a Li₂S-B₂S₃-based electrolyte. Such an electrolyte may further contain P₂O or Li₃PO₄. In particular, a sulfide-based solid electrolyte containing Li₂S and P₂S₅ has high Li-ion conductivity and hence is preferable.

(7) A buffer layer is preferably provided between the positive-electrode layer and the solid electrolyte layer, the buffer layer reducing an interface resistance between the positive-electrode layer and the solid electrolyte layer.

For example, when an oxide (for example, LiCoO₂ is used as a positive-electrode material and a sulfide is used for the solid electrolyte layer, the oxide may react with the sulfide so that the interface resistance of the interface between the positive-electrode layer and the solid electrolyte layer increases. The interface resistance can be decreased by providing a buffer layer that suppresses interdiffusion between the positive-electrode layer and the solid electrolyte layer at the near-interface region between these layers to thereby suppress the reaction.

Examples of a material for the buffer layer include LiNbOs, LiTaOs, Li₄Ti₅O₁₂, Li_{X}La_{(2-X)/3}TiO₃ (X = 0.1 to 0.5), Li_{7+X}La₃Zr₂O_{12+(X/2}) (-5 ≤ X ≤ 3), Li_{3.6}Si_{0.6}P_{0.4}O₄, Li_{1.3}Al_{0.3}Ti_{1.7}(PO₄)₃, Li_{1.8}Cr_{0.8}Ti_{1.2}(PO₄)₃, and Li_{1.4}In_{0.4}Ti_{1.6}(PO₄)₃. These materials may be used alone or in combination of two or more thereof.

(8) The positive-electrode layer is preferably composed of an oxide of lithium and at least one element selected from Mn, Fe, Co, and Ni.

Such a lithium oxide is a representative example of a positive-electrode active material for nonaqueous electrolyte batteries and is preferable for achieving a high battery capacity. Examples of the lithium oxide include LiCoO₂ LiNiO₂, LiNi_{0.5}Mn_{0.5}O₂, LiCo_{0.5}Fe_{0.5}O₂, LiNi_{0.5}Mn_{1.5}O₄, LiMn₂O₄, and LiFePO₄. Lithium oxides may be used alone or in combination of two or more thereof.

### Advantageous Effects of Invention

Since a nonaqueous electrolyte battery according to the present invention includes a specific boundary layer between the negative-electrode layer and the solid electrolyte layer, separation between the negative-electrode layer and the solid electrolyte layer due to repeated charge and discharge can be suppressed. As a result, even when the battery is repeatedly charged and discharged, the battery capacity is less likely to decrease and the battery has a high charge-discharge cycle capability.

### Brief Description of Drawings

[Fig. 1] Figure 1 is a schematic sectional view illustrating a nonaqueous electrolyte battery according to an embodiment of the present invention.
[Fig. 2] Figure 2 is a schematic sectional view illustrating a nonaqueous electrolyte battery of Sample No. 3-3 in Example 3.
[Fig. 3] Figure 3 is a schematic sectional view illustrating a nonaqueous electrolyte battery of Sample No. 3-6 in Example 3.

### Description of Embodiments

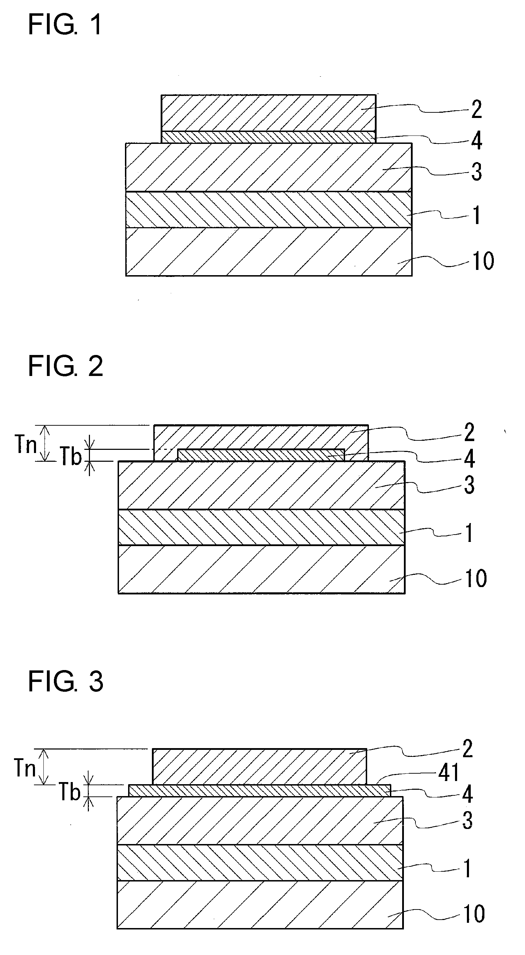

As illustrated in Fig. 1, a nonaqueous electrolyte battery according to the present invention has a basic configuration in which a positive-electrode layer 1, a solid electrolyte layer 3, and a negative-electrode layer 2 are stacked in this order; and a boundary layer 4 for maintaining the bond between the negative-electrode layer 2 and the solid electrolyte layer 3 is provided between the negative-electrode layer 2 and the solid electrolyte layer 3. The boundary layer 4 has a thickness of 50 nm or less.

### (EXAMPLE 1)

All-solid-state lithium secondary batteries having the stack configuration illustrated in Fig. 1 were produced and the performance of the batteries was evaluated.

### <Production procedures of batteries>

A LiCoO₂ film was deposited by a pulsed laser deposition (PLD) method on a stainless-steel base 10 (thickness: 0.5 mm, diameter: 16 mm) to thereby form the positive-electrode layer 1 (thickness: 5 µm, diameter: 16 mm). The formation area of the positive-electrode layer was adjusted with a mask having a size corresponding to the area of the positive-electrode layer to be formed. Similarly, the formation areas of the solid electrolyte layer, the boundary layer, and the negative-electrode layer described below were adjusted with appropriate masks. After the film was deposited, the base having the LiCoO₂ positive-electrode layer was annealed in the air at 500°C for 3 hours.

A LiNbO₃ film was then deposited by the PLD method on the positive-electrode layer 1 to thereby form a buffer layer (not shown). The buffer layer had a thickness of 0.02 µm and a diameter of 16 mm.

A film composed of a Li₂S-P₂S₅-based solid electrolyte was then deposited by the PLD method on the buffer layer to thereby form the solid electrolyte layer 3 (thickness: 10 µm, diameter: 16 mm).

A Si film was then deposited by the PLD method on the solid electrolyte layer 3 to thereby form the boundary layer 4 (thickness: 0.01 µm (10 nm), diameter: 10 mm). A Li film was further deposited on the boundary layer 4 by a vacuum deposition method to thereby form the negative-electrode layer 2 (thickness: 1 µm, diameter: 10 mm).

Finally, the stack was contained in a coin-shaped case to complete a coin-shaped all-solid-state lithium secondary battery. This battery was defined as Sample No. 1-1. In this example, the positive-electrode layer, the buffer layer, the solid electrolyte layer, the boundary layer, and the negative-electrode layer were formed so as to be coaxially superposed in plan view.

In addition, the thickness of just the boundary layer was controlled by changing the film-deposition time of the boundary layer to thereby produce Sample Nos. 1-2 to 1-10 described in Table I such that the boundary layers had different thicknesses. Furthermore, Sample No. 1-11 was produced as with Sample No. 1-1 except that the boundary layer was not formed.

The batteries of Sample Nos. 1-1 to 1-11 were subjected to a charge-discharge cycle test in which a cutoff voltage was 3.0 to 4.2 V, a current density was 0.05 mA/cm², and a charge and a discharge were defined as a single cycle. The capacity retention of each battery at the 100th cycle was determined. The results are described in Table I. The capacity retention was determined as a relative value of a discharge capacity at the 100th cycle with respect to the discharge capacity at the 1 st cycle.

**[Table I]**

| Sumple No. | Thickness of boundary layer (nm) | Capacity retention (%) |
|---|---|---|
| 1-1 | 10 | 90 |
| 1-2 | 20 | 91 |
| 1-3 | 30 | 83 |
| 1-4 | 40 | 82 |
| 1-5 | 50 | 80 |
| 1-6 | 60 | 63 |
| 1-7 | 70 | 56 |
| 1-8 | 80 | 52 |
| 1-9 | 90 | 52 |
| 1-10 | 100 | 51 |
| 1-11 | 0 (Not formed) | 52 |

The results in Table I indicate that Sample Nos. 1-1 to 1-5 in which the boundary layer has a thickness of 0.05 µm (50 nm) or less have a capacity retention of 80% or more at the 100th cycle and have a high charge-discharge cycle capability. In particular, Sample Nos. 1-1 and 1-2 in which the boundary layer has a thickness of 0.02 µm (20 nm) or less have a capacity retention of 90% or more at the 100th cycle and hence have a higher charge-discharge cycle capability.

In contrast, Sample Nos. 1-6 to 1-10 in which the boundary layer has a thickness of 60 nm or more and Sample No. 1-11 having no boundary layer have a low capacity retention at the 100th cycle and hence have a poor charge-discharge cycle capability.

### (EXAMPLE 2)

All-solid-state lithium secondary batteries having a stack configuration were produced as in Example 1 except that the Ar concentration of the boundary layer was controlled, and the performance of the batteries was evaluated as in Example 1.

### <Production procedures of batteries>

A LiCoO₂ film was deposited by a sputtering method on a stainless-steel base (thickness: 100 µm) to thereby form a positive-electrode layer (thickness: 1 µm). After the film was deposited, the base having the LiCoO₂ positive-electrode layer was annealed in the air at 500°C for 3 hours.

A LiNbO₃ film was then deposited by a PLD method on the positive-electrode layer to thereby form a buffer layer (thickness: 20 nm).

A film composed of a Li₂S-P₂S₅-based solid electrolyte was then deposited on the buffer layer by a vacuum deposition method to thereby form a solid electrolyte layer (thickness: 5 µm).

A Si film was then deposited on the solid electrolyte layer by the sputtering method to thereby form a boundary layer (thickness: 20 nm). A Li film was further deposited on the boundary layer by the vacuum deposition method to thereby form a negative-electrode layer (thickness: 1 µm).

The boundary layer composed of Si was formed in Ar-containing plasma. Specifically, a film-deposition chamber was evacuated to 3 × 10⁻³ Pa and Ar gas was then supplied into the film-deposition chamber such that the atmosphere pressure became 0.4 Pa during the film deposition. An electric power of 1 kW was supplied to generate Ar plasma; and a Si target was sputtered with the Ar plasma to deposit an Ar-containing Si film (boundary layer) on the solid electrolyte layer.

Finally, the stack was contained in a coin-shaped case to complete a coin-shaped all-solid-state lithium secondary battery. This battery was defined as Sample No. 2-1. In this example, the positive-electrode layer, the buffer layer, the solid electrolyte layer, the boundary layer, and the negative-electrode layer were formed so as to have the same area.

In addition, the Ar concentration of the boundary layer was controlled by changing the atmosphere pressure during the film deposition to thereby produce Sample Nos. 2-2 to 2-4 described in Table II such that the boundary layers had different Ar concentrations. The Ar concentrations of the boundary layers were measured by energy-dispersive fluorescent X-ray analysis.

As in Example 1, the capacity retention of the batteries of Sample Nos. 2-1 to 2-4 at the 100th cycle was determined. The results are described in Table II.

**[Table II]**

| Sample No. | Atmosphere pressure during film deposition (Pa) | Ar concentration of boundary layer (atom%) | Capacity retention (%) |
|---|---|---|---|
| 2-1 | 0.4 | 0.2 | 91 |
| 2-2 | 1.0 | 0.5 | 88 |
| 2-3 | 2.0 | 1.0 | 86 |
| 2-4 | 3.0 | 1.5 | 75 |

The results in Table II indicate that Sample Nos. 2-1 to 2-3 in which the boundary layer has an Ar concentration of 1.0 atomic percent or less have a capacity retention of 80% or more at the 100th cycle and hence have a high charge-discharge cycle capability, compared with No. 2-4 in which the Ar concentration is 1.5 atomic percent. This is probably because, when the boundary layer has an Ar concentration of 1 atomic percent or less, turning of the boundary layer into fine powder due to repeated charge and discharge can be suppressed and, as a result, a decrease in the battery capacity can be suppressed.

### (EXAMPLE 3)

All-solid-state lithium secondary batteries having a stack configuration were produced as in Example 1 except that the formation area of the boundary layer was controlled, and the performance of the batteries was evaluated as in Example 1.

### <Production procedures of batteries>

A LiCoO₂ film was deposited by a pulsed laser deposition (PLD) method on a stainless-steel base 10 (thickness: 0.5 mm, diameter: 16 mm) to thereby form the positive-electrode layer 1 (thickness: 5 µm, diameter: 16 mm). After the film was deposited, the base having the LiCoO₂ positive-electrode layer was annealed in the air at 500°C for 3 hours.

A LiNbO₃ film was then deposited by the PLD method on the positive-electrode layer 1 to thereby form a buffer layer (not shown). The buffer layer had a thickness of 0.02 µm and a diameter of 16 mm.

A film composed of a Li₂S-P₂S₅-based solid electrolyte was then deposited by the PLD method on the buffer layer to thereby form the solid electrolyte layer 3 (thickness: 5 µm, diameter: 16 mm).

A Si film was then deposited by the PLD method on the solid electrolyte layer 3 to thereby form the boundary layer 4 (thickness: 0.03 µm, diameter: 4 mm). A Li film was further deposited on the boundary layer 4 by a vacuum deposition method to thereby form the negative-electrode layer 2 (thickness: 1 µm, diameter: 10 mm). In this example, the ratio (Tb/Tn) of the thickness Tb of the boundary layer 4 to the thickness Tn of the negative-electrode layer 2 was 0.03.

Finally, the stack was contained in a coin-shaped case to complete a coin-shaped all-solid-state lithium secondary battery. This battery was defined as Sample No. 3-1. In this example, the positive-electrode layer, the buffer layer, the solid electrolyte layer, the boundary layer, and the negative-electrode layer were formed so as to be coaxially superposed in plan view.

In addition, the formation area of just the boundary layer was controlled by changing the size of a mask used in the film deposition of the boundary layer to thereby produce Sample Nos. 3-2 to 3-6 described in Table III such that the boundary layers had different formation areas.

For example, Sample No. 3-3 has a configuration illustrated in Fig. 2 in which the area of the boundary layer is equal to or less than the area of the negative-electrode layer: specifically, the ratio between the area Sn of the negative-electrode layer and the area Sb of the boundary layer satisfies Sb < Sn and the boundary layer is formed so as not to protrude beyond the circumference of the negative-electrode layer in plan view. In contrast, for example, Sample No. 3-6 has a configuration illustrated in Fig. 3 in which the boundary layer protrudes beyond the circumference of the negative-electrode layer in plan view (Sb > Sn) and the boundary layer has a protruding region (denoted by a reference sign 41 in Fig. 3) that is not covered by the negative-electrode layer. In Example 3, the thickness Tn of the negative-electrode layer and the thickness Tb of the boundary layer are the maximum thicknesses as illustrated in Figs. 2 and 3.

The batteries of Sample Nos. 3-1 to 3-6 were subjected to a charge-discharge cycle test under conditions as in Example 1 and the capacity retention of each battery at the 10th cycle was determined. The results are described in Table III.

**[Table III]**

| Sample No. | Formation area of positive-electrode layer | Formation area of negative-electrode layer | Formation area of boundary layer | Capacity retention (%) |
|---|---|---|---|---|
| 3-1 | Diameter: 16mm | Diameter: 10mm | Diameter: 4mm | 99 |
| 3-2 | Diameter: 16mm | Diameter: 10mm | Diameter: 6mm | 98 |
| 3-3 | Diameter: 16mm | Diameter: 10mm | Diameter: 8mm | 99 |
| 3-4 | Diameter: 16mm | Diameter: 10mm | Diameter: 10mm | 87 |
| 3-5 | Diameter: 16mm | Diameter: 10mm | Diameter: 12mm | 52 |
| 3-6 | Diameter: 16mm | Diameter: 10mm | Diameter: 14mm | 45 |

The results in Table III indicate that Sample Nos. 3-1 to 3-3 have a capacity retention of 90% or more at the 10th cycle and hence have a high charge-discharge cycle capability. In contrast, Sample Nos. 3-5 and 3-6 have a low capacity retention at the 10th cycle and have a poor charge-discharge cycle capability. This is probably because, as a result of repeated charge and discharge, Li precipitates on the surface of the protruding region of the boundary layer, causing a decrease in the capacity.

Sample No. 3-4 was carefully inspected and it was found that a portion of the boundary layer actually protruded beyond the negative-electrode layer. This is probably because the film deposition of the negative-electrode layer was performed in a misaligned position due to the misalignment of the mask. This is presumably the reason why the capacity retention of Sample No. 3-4 was poor, compared with Sample Nos. 1-1 to 1-3.

The present invention is not limited to the above-described embodiments and the embodiments can be properly modified without departing from the spirit and scope of the present invention. For example, the thickness or area of the boundary layer may be properly changed. The boundary layer may be formed of a group 14 element in the periodic table other than Si, that is, C, Ge, Sn, or Pb. These elements also have the capability of intercalating Li ions having moved from the positive-electrode layer and allowing the Li ions to diffuse into the negative-electrode layer on charge and hence probably provide advantages that are substantially the same as those provided by Si.

### Industrial Applicability

A nonaqueous electrolyte battery according to the present invention is suitably applicable to power supplies of, for example, cellular phones, notebook computers, digital cameras, and electric vehicles.

### Reference Signs List

- 1: positive-electrode layer
- 2: negative-electrode layer
- 3: solid electrolyte layer
- 4: boundary layer (Si film)
41 protruding region
- 10: base

## Claims

1. A nonaqueous electrolyte battery comprising a positive-electrode layer, a negative-electrode layer, and a solid electrolyte layer interposed between the positive-electrode layer and the negative-electrode layer,
wherein a boundary layer is provided between the negative-electrode layer and the solid electrolyte layer,
the negative-electrode layer contains Li,
the boundary layer contains a group 14 element in the periodic table, and
the boundary layer has a thickness of 50 nm or less.

2. The nonaqueous electrolyte battery according to Claim 1, wherein, in plan view, the boundary layer has an area equal to or less than an area of the negative-electrode layer.

3. The nonaqueous electrolyte battery according to Claim 1 or 2, wherein the element contained in the boundary layer is Si.

4. The nonaqueous electrolyte battery according to Claim 1 or 2, wherein the boundary layer is substantially composed of Si.

5. The nonaqueous electrolyte battery according to Claim 1 or 2, wherein the boundary layer has an Ar concentration of 1 atomic percent or less.

6. The nonaqueous electrolyte battery according to Claim 1 or 2, wherein, when a thickness of the negative-electrode layer is defined as Tn and the thickness of the boundary layer is defined as Tb, a ratio of Tb to Tn satisfies 0.005 < Tb/Tn < 0.5.

7. The nonaqueous electrolyte battery according to Claim 1 or 2, wherein the solid electrolyte layer is composed of a sulfide-based solid electrolyte containing Li₂S and P₂S₅.

8. The nonaqueous electrolyte battery according to Claim 1 or 2, further comprising a buffer layer between the positive-electrode layer and the solid electrolyte layer, the buffer layer reducing an interface resistance between the positive-electrode layer and the solid electrolyte layer.

9. The nonaqueous electrolyte battery according to Claim 1 or 2, wherein the positive-electrode layer is composed of an oxide of lithium and at least one element selected from Mn, Fe, Co, and Ni.
